(19) Europäisches Patentamt
European Patent Office
Office européen des brevets

(11) **EP 2 502 743 A1**

(12) **EUROPEAN PATENT APPLICATION**
published in accordance with Art. 153(4) EPC

(43) Date of publication:
26.09.2012 Bulletin 2012/39

(51) Int Cl.:
*B32B 27/32* (2006.01)        *B32B 5/18* (2006.01)
*H01M 2/16* (2006.01)         *H01M 10/052* (2010.01)
*H01M 10/0566* (2010.01)

(21) Application number: 10831676.1

(22) Date of filing: 22.11.2010

(86) International application number:
**PCT/JP2010/070760**

(87) International publication number:
**WO 2011/062285 (26.05.2011 Gazette 2011/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 20.11.2009 JP 2009264589

(71) Applicant: **Mitsubishi Plastics, Inc.**
**Tokyo 103-0021 (JP)**

(72) Inventors:
• **TAKAGI, Yoshihito**
  **Nagahama-shi**
  **Shiga 526-8660 (JP)**

• **IMANAKA, Satoru**
  **Nagahama-shi**
  **Shiga 526-8660 (JP)**
• **NEMOTO, Tomoyuki**
  **Nagahama-shi**
  **Shiga 526-8660 (JP)**
• **USAMI, Yasushi**
  **Nagahama-shi**
  **Shiga 526-8660 (JP)**

(74) Representative: **Hayes, Adrian Chetwynd et al**
**Boult Wade Tennant**
**Verulam Gardens**
**70 Gray's Inn Road**
**London WC1X 8BT (GB)**

(54) **LAMINATED POROUS FILM, SEPARATOR FOR BATTERY, AND BATTERY**

(57)     Disclosed is a laminated porous film which has both gas permeability and heat resistance and can exhibit excellent smoothness and excellent pin extraction properties when used as a separator for a battery. The laminated porous film is characterized by having a heat-resistant layer laminated on at least one surface of a polyolefin resin porous film, wherein the heat-resistant layer comprises a filler and a resin binder, and wherein the surface of the heat-resistant layer has a static friction coefficient of 0.45 or less, a gas permeability degree of 2000 sec/100 ml or less and a tensile elastic modulus of 400 to 1000 MPa when the film is stretched in the lengthwise direction at a stretching rate of 3%.

Fig. 2

EP 2 502 743 A1

**Description**

TECHNICAL FIELD

The present invention relates to a laminated porous film, a separator for a battery, and the battery and more particularly to a laminated porous film which can be utilized materials for packing supplies, hygiene products, livestock supplies, agricultural supplies, building supplies, medical supplies, separation films, light diffusing plates, and particularly the separator for the battery, and can be utilized as the separator for the nonaqueous electrolyte battery.

BACKGROUND ART

A polymeric porous material having a large number of pores intercommunicable with each other is utilized in various fields. For example, the polymeric porous material is utilized to produce ultrapure water, purify chemicals, and as a separation film to be used for water treatment, as a waterproof breathable film to be used for clothes and sanitary materials, and as the separator for the battery.

A secondary battery is widely used as the power source of OA, FA, household appliances, and portable devices such as communication instruments. Of the secondary batteries, a lithium-ion secondary battery has a favorable volumetric efficiency when it is mounted on apparatuses and allows the apparatuses to be compact and lightweight. Therefore there is an increase in the use of portable devices in which the lithium-ion secondary battery is used. Owing to research and development of a large secondary battery which has been made in the field of load leveling, UPS, an electric car, and in many fields relating to the problem of energy and environment, the lithium-ion secondary battery which is a kind of the nonaqueous electrolyte secondary battery has widely spread in its use because the lithium-ion secondary battery has a large capacity, a high output, a high voltage, and an excellent long-term storage stability.

The lithium-ion secondary battery is so designed that the upper limit of the working voltage thereof is usually 4.1 to 4.2 V. Because electrolysis occurs in an aqueous solution at such a high voltage, the aqueous solution cannot be used as an electrolyte. Therefore as an electrolyte capable of withstanding a high voltage, a so-called nonaqueous electrolyte in which an organic solvent is used is adopted. As a solvent for the nonaqueous electrolyte, an organic solvent having a high permittivity which allows a large number of lithium ions to be present is widely used. Organic carbonate ester such as polypropylene carbonate or ethylene carbonate is mainly used as the organic solvent having a high permittivity. As a supporting electrolyte serving as the ion source of the lithium ion in the solvent, an electrolyte having a high reactivity such as lithium phosphate hexafluoride is used in the solvent by melting it therein.

The separator is interposed between the positive electrode of the lithium-ion secondary battery and its negative electrode to prevent an internal short circuit from occurring. Needless to say, the separator is demanded to have insulating performance as its role. In addition the separator is required to have a porous structure so that air permeability of allowing lithium ions to pass therethrough and a function of diffusing and holding the electrolyte are imparted thereto. To satisfy these demands, a porous film is used as the separator

Because batteries having a high capacity are used recently, the degree of importance for the safety of the battery has increased. A shut-down property (hereinafter referred to as SD property) contributes to the safety of the separator for the battery. The SD property is the function of preventing the temperature inside the battery from rising because of closing of pores when the battery has a high temperature of 100˚C to 150˚C, which leads to shut-off of ion conduction inside the battery off. At this time, "SD temperature" means the lowest temperature of temperatures at which the pores of a laminated porous film are closed. To use the laminated porous film as the separator for the battery, it is necessary for the porous film to have the SD property.

Recently with an increase in the use of the lithium-ion secondary battery having a high-energy density and a high power, the normal shut-down function does not sufficiently work and thus the temperature inside the battery exceeds 150˚C which is the melting point of polyethylene and rises to higher temperatures, which may lead to the breakage of the separator. Thus to secure safety, the development of a separator having the current SD property and heat resistance is demanded.

To comply with the above-described demand, there are proposed the separator including the porous film having the shut-down function and the porous layer (patent document 1), the separator composed of the porous layer containing the thermoplastic resin as its main component and the heat-resistant porous layer laminated thereon (patent document 2), the separator composed of the porous film consisting of the water-soluble porous film and the porous film, consisting of polyolefin, which is laminated thereon (patent document 3), the laminated porous film composed of the porous layer, containing the inorganic filler and the resin binder, which is layered on at least one surface of the polyolefin resin porous film (patent document 4), and the porous film having the coating layer disposed on the porous polypropylene film (patent document 5).

As one of the properties demanded for the separator, slip properties are also demanded. The slip properties include the pin extraction properties in assembling a battery. In lithium-ion secondary batteries of a winding type such as a cylindrical type, a rectangular type, and the like, after the separator, a positive electrode, and a negative electrode are layered one upon another, the separator, the positive electrode, and the negative electrode are wound round the pin. Thereafter through the step of pulling spiral battery elements from the pin, the battery is assembled. At this time, when the slip performance of the separator which contacts the pin is unfavorable, the battery elements cannot be pulled out of the pin. Thus the lithium-ion secondary battery has a problem that when it is difficult to pull the battery elements out of the pin, its productivity is adversely affected. To improve the slip performance, the pin is surface-treated to make the friction coefficient thereof low (patent document 6).

PRIOR ART DOCUMENT

PATENT DOCUMENT

Patent document 1: Japanese Patent Application Laid-Open No. 2000-223107
Patent document 2: Japanese Patent No. 3756815
Patent document 3: Japanese Patent Application Laid-Open No. 2004-227972
Patent document 4: Japanese Patent Application Laid-Open No. 2009-26733
Patent document 5: Japanese Patent Application Laid-Open No. 2009-114434
Patent document 6: Japanese Patent Application Laid-Open No. 2009-70726

SUMMARY OF THE INVENTION

PROBLEM TO BE SOLVED BY THE INVENTION

In the patent documents 1 through 5, the slip performance is not considered. The separator of the patent document 1 has a problem that the aromatic polyamide used for the separator is low in its slip performance.
In the patent document 6, although the pin extraction property is favorable, the pin causes the film to wrinkle in winding the film at a film formation time. Thus the separator has a problem that the processability is low and is unpreferable from the standpoint of the productivity.
The present invention has been made to solve the above-described problem. Therefore it is an object of the present invention to provide a laminated porous film which has both an air-permeable property and heat resistance and an excellent slip performance and the pin extraction properties when the laminated porous film is used as a separator for a battery.

MEANS FOR SOLVING THE PROBLEM

To solve the above-described problem, the present invention provides a laminated porous film in which a heat-resistant layer containing a filler and a resin binder is layered on at least one surface of a polyolefin resin porous film; a coefficient of static friction of a surface of the heat-resistant layer is not more than 0.45; an air permeability of the laminated porous film is not more than 2000 seconds/100ml; and a tensile modulus of elasticity of the laminated porous film is 400 to 1000 MPa when the laminated porous film is elongated by 3% in a longitudinal direction thereof.
In the laminated porous film of the present invention, when the laminated porous film is used as a separator for a battery, after the separator, a positive electrode, and a negative electrode are layered one upon another and wound round a pin to form spiral battery elements. Thereafter to improve the slip performance of the separator which contacts the pin at the step of pulling the battery elements out of the pin, the coefficient of static friction of the surface of the heat-resistant layer which contacts the pin is set to as low as 0.45. By setting the coefficient of static friction of the surface of the heat-resistant layer of the laminated porous film used as the separator for the battery to as low as 0.45, in pulling the battery elements out of the pin after the battery elements are wound round the pin, the battery elements can be pulled out of the pin without deforming them.
As described above, to preferably pull the battery elements out of the pin, the coefficient of static friction of the surface of the heat-resistant layer is important. As described above, the coefficient of static friction of the surface of the heat-resistant layer is set to not more than 0.45 and favorably 0.40. The lower limit of the coefficient of static friction of the surface thereof is not limited to a specific value, but from the standpoint of processability, the lower limit of the coefficient of static friction of the surface thereof is set to favorably not less than 0.10, more favorably not less than 0.15, and most favorably not less than 0.20.
In the laminated porous film of the present invention, as described above, it is important that the tensile modulus of elasticity of the laminated porous film is set to 400 to 1000 MPa when it is elongated by 3% in its longitudinal direction.

By setting the tensile modulus of elasticity of the laminated porous film to not less than 400 MPa when the laminated porous film is elongated by 3%, in winding and transporting the laminated porous film used as the separator for the battery, the laminated porous film is elongated and there does not occur a problem that the laminated porous film wrinkles. Therefore the laminated porous film can be preferably used. The tensile modulus of elasticity of the laminated porous film is favorably not less than 450 MPa and more favorably not less than 500 MPa. On the other hand, from the standpoint of flexibility and handling, regarding the upper limit of the tensile modulus of elasticity thereof, the upper limit of the tensile modulus of elasticity thereof is favorably not more than 1000 MPa, more favorably not more than 900 MPa, and most favorably not more than 800 MPa.

The method of measuring the tensile modulus of elasticity of the laminated porous film when it is elongated by 3% conforms to the measuring method described in an embodiment described later.

The air permeability of the laminated porous film of the present invention measured in accordance with JIS P8117 is set to not more than 2000 seconds/100ml so that when the laminated porous film is used as the separator for the battery, it is allowed to have a required SD property.

When the air permeability of the laminated porous film is not more than 2000 seconds/100ml, the laminated porous film shows that it has intercommunicable property and thus an excellent air-permeable performance, which is preferable. The air permeability thereof is favorably 10 to 1000 seconds/100ml and more favorably 50 to 800 seconds/100ml.

The air permeability means the degree of difficulty in pass-through of air in the thickness direction of the film and is expressed in seconds it takes for air having a volume of 100ml to pass through the film. Therefore the smaller a numerical value is, the more easily the air passes through the film. On the other hand, the larger the numerical value is, the more difficultly the air passes therethrough. That is, the smaller the numerical value is, the more favorable the intercommunicable property is in the thickness direction of the film. On the other hand, the larger the numerical value is, the less favorable the intercommunicable property is in the thickness direction thereof. The intercommunicable property means the degree of connection between pores in the thickness direction of the film.

When the air permeability of the laminated porous film of the present invention is low, it can be used for various purposes. When the air permeability is low in the case where the laminated porous film is used as the separator for the battery, lithium ions move easily and thus the battery is excellent in its performance, which is preferable.

To use the laminated porous film of the present invention as the separator for the battery, after the laminated porous film is heated at 135˚C for five seconds, the air permeability thereof is set to favorably not less than 10000 seconds/100ml, more favorably not less than 25000 seconds/100ml, and most favorably not less than 50000 seconds/100ml. By setting the air permeability of the laminated porous film after it is heated at 135˚C for five seconds to not less than 10000 seconds/100ml, pores are closed rapidly when heat is abnormally generated and electric current is shut off. Thereby it is possible to prevent the occurrence of troubles of the battery such as rupture.

It is preferable that the ratio of the filler to the total of the amount of the filler and that of the resin binder is not less than 92 mass%.

In the laminated porous film of the present invention, the polyolefin resin porous film is composed of a layer A consisting of a polypropylene resin porous film and a layer B, consisting of a polyethylene resin porous film, which is sandwiched between two of the layer A; and a surface of the laminated porous film is a corona-treated surface on which the heat-resistant layer is layered.

It is preferable that the laminated porous film of the present invention has β activity.

The β activity can be considered as an index indicating that the polypropylene resin of a membrane material generates β crystal before the membrane material is stretched. When the polypropylene resin of the membrane material generates the β crystal before the membrane material is stretched, pores are formed by stretching the membrane material even in the case where an additive such as the filler is not used. Thereby it is possible to obtain the laminated porous film having an air-permeable property.

When a crystal melting peak temperature derived from the β crystal is detected by a differential scanning calorimeter described later and/or when a diffraction peak derived from the β crystal is detected by measurement to be made by using a wide-angle X-ray diffraction measuring apparatus described later, it is judged that the laminated porous film has the β activity.

It is favorable that a shrinkage factor of the laminated porous film of the present invention at 150˚C is set to not more than 10%.

By setting the shrinkage factor of the laminated porous film at 150˚C to not more than 10%, when heat is abnormally generated beyond an SD temperature, the laminated porous film has a favorable dimensional stability and is not broken. Thus it is possible to improve an internal short-circuit temperature. Although the lower limit of the shrinkage factor is not limited, it is more favorable that the shrinkage factor thereof at 150˚C is not less than 2%.

It is favorable that a porosity of the laminated porous film of the present invention is set to 30 to 70% and that a thickness thereof is set to 5 to 100μm.

The reason the porosity thereof is set to 30% to 70% is because when the porosity thereof is not less than 30%, the laminated porous film to be obtained secures intercommunicable property and has excellent air-permeable property.

On the other hand, when the porosity thereof is not more than 70%, the laminated porous film to be obtained is unlikely to deteriorate in its strength, which is preferable from the standpoint of handling it.

The porosity of the laminated porous film is set to more favorably not less than 35% and most favorably not less than 40%. Regarding the upper limit of the porosity thereof, the porosity thereof is set to favorably not more than 65% and more favorably not less than 60%.

The method of measuring the porosity is described later.

The present invention provides a separator for a nonaqueous electrolyte battery in which the laminated porous film having above-described structure is used.

The present invention provides a nonaqueous electrolyte battery in which the separator for the nonaqueous electrolyte battery is used.

EFFECT OF THE INVENTION

Because the laminated porous film of the present invention has air-permeable property and heat resistance and in addition is excellent in its slip performance and the performance of pulling the battery elements from the pin. Therefore the laminated porous film of the present invention can be preferably used as the separator for the battery.

BRIEF DESCRIPTION OF THE DRAWINGS

Fig. 1 is a partly broken-away perspective view of a battery accommodating a laminated porous film of the present invention.
Fig. 2 explains a pin which is used in a winding step.
Fig. 3 explains a measuring apparatus for measuring the pin extraction properties.
Fig. 4 explains an SD property and a method of fixing the laminated porous film in X-ray diffraction measurement.

MODES FOR CARRYING OUT THE INVENTION

The embodiments of the laminated porous film of the present invention are described in detail below.

The laminated porous film of the present invention is preferably used as a separator for a nonaqueous electrolyte battery. A heat-resistant layer containing a filler and a resin binder is layered on at least one surface of a polyolefin resin porous film. The coefficient of static friction of the surface of the heat-resistant layer is not more than 0.45. The air permeability of the laminated porous film is set to not more than 2000 seconds/100ml. The tensile modulus of elasticity of the laminated porous film is 400 to 1000 MPa when the laminated porous film is elongated by 3% in its longitudinal direction.

Each of components composing the laminated porous film of the present invention is described below.

In the present invention, unless specifically described, the expression of "main component" includes a case in which a resin composition contains components other than the main component in a range where the function of the main component is not inhibited. Although the content ratio of the main component is not specified, the expression of "main component" also means that the main component is contained in the resin composition at not less than 50 mass%, favorably not less than 70 mass%, and especially favorably not less than 90 mass% (including 100 mass%).

Unless otherwise described, the description of "X to Y" (X, Y are any numerals) means "not less than X nor more than Y" and also includes meaning "preferably larger than X" and "preferably smaller than Y".

(Polyolefin Resin Porous Film)

As examples of the polyolefin resin to be used for the polyolefin resin porous film, homopolymers or copolymers formed by polymerizing ethylene, propylene, 1-butene, 4-methyl-1-pentene, hexane-1, 1-hexane, and the like are listed. Of these polyolefin resins, the polypropylene resin and the polyethylene resin are preferable.

(Polypropylene Resin)

As the polypropylene resin, random copolymers or block copolymers consisting of homo-polypropylene (propylene homopolymer)or random copolymers or block copolymers of propylene and $\alpha$-olefin such as ethylene, 1-butene, 1-pentene, 1-hexene, 1-heptene, 1-octene, 1-nonen or 1-decene are listed. Of the above-described polypropylene resins, the homo-polypropylene is used more favorably from the standpoint that it is capable of maintaining the mechanical strength and heat resistance of the laminated porous film.

It is favorable to use the polypropylene resin having an isotactic structure pentad fraction (mmmm fraction) showing tacticity at 80 to 99%. It is more favorable to use the polypropylene resin having the isotactic structure pentad fraction at 83 to 98% and most favorable to use the polypropylene resin having the isotactic structure pentad fraction at 85 to 97%. When the isotactic structure pentad fraction is too low, there is a fear that the mechanical strength of the film is low. On the other hand, the upper limit of the isotactic structure pentad fraction is specified by the upper limit value currently industrially obtained. But in the case where a resin having a higher regularity at an industrial level is developed in the future, there is a possibility that the upper limit of the isotactic structure pentad fraction is altered.

The isotactic structure pentad fraction (mmmm fraction) means a three-dimensional structure in which all of five methyl groups which are side chains branched from a main chain consisting of a carbon-carbon bond composed of arbitrary continuous five propylene units are positioned in the same direction or the ratio thereof. The attribution of a signal in a methyl group region complies with A. Zambelli et al (Marcomolecules 8,687, (1975)).

It is favorable that Mw/Mn which is a parameter showing the molecular-weight distribution of the polypropylene resin is 2.0 to 10.0. It is more favorable to use the polypropylene resin having the Mw/Mn of 2.0 to 8.0 and most favorable to use the polypropylene resin having the Mw/Mn of 2.0 to 6.0. The smaller is the Mw/Mn, the narrower is the molecular-weight distribution. When the Mw/Mn is less than 2.0, there occurs a problem that extrusion moldability is low, and in addition it is difficult to industrially produce the polypropylene resin. On the other hand, when the Mw/Mn exceeds 10.0, the amount of a low molecular-weight component becomes large. Thereby the mechanical strength of the laminated porous film is liable to be low. The Mw/Mn is obtained by a GPC (gel permeation chromatography) method.

Although the melt flow rate (MFR) of the polypropylene resin is not specifically limited, normally, the melt flow rate (MFR) thereof is favorably 0.5 to 15g/10 minutes and more favorably 1.0 to 10g /10 minutes. By setting the MFR to not less than 0.5g/10 minutes, the melt viscosity of the resin is high at a molding processing time and thus a sufficient productivity can be securely obtained. On the other hand, by setting the MFR to not more than 15g/10 minutes, it is possible to sufficiently hold the mechanical strength of the laminated porous film to be obtained. The MFR is measured in accordance with JIS K7210 in a condition where temperature is 230°C and a load is 2.16kg.

The method of producing the polypropylene resin is not limited to a specific one, but it is possible to exemplify known polymerization methods using a known polymerization catalyst, for example, a multi-site catalyst represented by a Ziegler-Natta type catalyst and a single-site catalyst represented by a Metallocene catalyst.

As the polypropylene resin, it is possible to use the following products commercially available: "Novatec PP" and "WINTEC" (produced by Japan Polypropylene Corporation), "Versify", "Notio", and "TAFMER XR" (produced by Mitsui Chemicals, Inc.), "ZELAS" and "Thermorun" (produced by Mitsubishi Chemical Corporation), "Sumitomo NOBRENE" and "Tafcelene" (produced by Sumitomo Chemical Co., Ltd.), "Prime TPO" (produced by Prime Polymer Corporation), "AdfleX", "Adsyl", and "HMS-PP (PF814)" (produced by SunAllomer Ltd.), and "Inspire" (produced by Dow Chemical Company).

It is preferable that as described above, the laminated porous film of the present invention has "β activity". Whether the laminated porous film has the β activity is judged as follows: More specifically, after the temperature of the laminated porous film is raised from 25°C to 240°C at a heating speed of 10°C/minute, the temperature is held at 240°C for one minute. After the temperature of the laminated porous film is dropped from 240°C to 25°C at a cooling speed of 10°C/minute, the temperature is held at 25°C for one minute. In the case where the crystal melting peak temperature (Tmβ) derived from the β crystal of the polypropylene resin is detected when the temperature of the laminated porous film is raised again from 25°C to 240°C at the heating speed of 10°C/minute, it is judged that the laminated porous film has the β activity.

The β activity degree of the laminated porous film is computed based on an equation shown below by using a detected crystal melting heat amount (ΔHmα) derived from α crystal of the polypropylene resin and a detected crystal melting heat amount ΔHmβ) derived from the β crystal thereof.

$$\beta \text{ activity degree (\%)} = [\Delta Hm\beta/(\Delta Hm\beta + \Delta Hm\alpha)] \times 100$$

For example, in the case where the polypropylene resin is the homopropylene, the β activity degree can be computed from the crystal melting heat amount (ΔHmβ), derived from the β crystal, which is detected mainly in a range not less than 145°C and less than 160°C and from the crystal melting heat amount (ΔHmα), derived from the α crystal, which is detected mainly in a range not less than 160°C nor more than 170°C. In the case of random polypropylene in which ethylene is copolymerized at 1 to 4 mol%, the β activity degree can be computed from the crystal melting heat amount (ΔHmβ), derived from the β crystal, which is detected mainly in a range not less than 120°C and less than 140°C and from the crystal melting heat amount (ΔHmα), derived from the α crystal, which is detected mainly in a range not less than 140°C nor more than 165°C.

As described above, the β activity degree of the laminated porous film is favorably not less than 20%, more favorably not less than 40%, and especially favorably not less than 60%. When the laminated porous film has the β activity degree not less than 20%, many pores fine and homogeneous can be formed by stretching the laminated porous film. Consequently a lithium-ion secondary battery to be obtained has a high mechanical strength and an excellent air-permeable performance.

The upper limit value of the β activity degree is not limited to a specific value. But the higher the β activity degree is, the more effectively the above-described effect is obtained. Therefore it is preferable that the upper limit of the β activity degree is as close as to 100%.

Whether the laminated porous film has the β activity can be also determined based on a diffraction profile to be obtained by conducting wide-angle X-ray diffraction measurement of the laminated porous film which has undergone specific heat treatment.

In detail, after the laminated porous film is thermally treated at 170 to 190˚C higher than the melting point of the polypropylene resin, the laminated porous film is gradually cooled to carry out the wide-angle X-ray diffraction measurement thereof in which the β crystal has been generated and grown. When a diffraction peak derived from a (300) plane of the β crystal of the polypropylene resin is detected in a range of $2\theta = 16.0˚$ to $16.5˚$, it is determined that the laminated porous film has the β activity.

Regarding the detail of the β crystal structure of the polypropylene resin and the wide-angle X-ray diffraction measurement, it is possible to refer to Macromol. Chem. 187,643-652 (1986), Prog. Polym. Sci. Vol. 16,361-404 (1991), Macromol. Symp. 89,499-511 (1995), Macromol. Chem. 75,134 (1964), and reference documents listed in these documents. The method of evaluating the β activity to be carried out by using the wide-angle X-ray diffraction measurement is shown in detail in the examples of the present invention to be described later.

The β activity can be measured in both the case in which the polypropylene resin porous film has a single-layer structure and the case in which the polypropylene resin porous film and other porous layers are laminated one upon another.

It is preferable that in the case where a layer containing the polypropylene resin is layered on a layer other than a layer consisting of the polypropylene resin, both layers have the β activity.

As methods of obtaining the β activity, a method of adding polypropylene treated to generate a peroxide radical to a resin composition, as described in Patent No. 3739481 and a method of adding a β crystal nucleating agent to the resin composition are exemplified.

(β Crystal Nucleating Agent)

As the β crystal nucleating agent to be used in the present invention, those shown below can be used. Provided that the generation and growth of the β crystal of the polypropylene resin is increased, the use of the β crystal nucleating agent is not limited to specific kinds. The β crystal nucleating agents may be used by mixing not less than two kinds thereof with each other.

As the β crystal nucleating agent, it is possible to list amide compounds; tetraoxaspiro compounds; quinacridones; iron oxides having a nano-scale size; alkaline metal salts or alkaline earth metal salts of carboxylic acid represented by 1,2-potassium hydroxystearate, magnesium benzoate, magnesium succinate, and magnesium phthalate; aromatic sulfonic acid compounds represented by sodium benzensulfonate and sodium naphthalene sulfonate; diesters or triesters of dibasic or tribasic carboxylic acid; phthalocyanine-based pigments represented by phthalocyanine blue; two-component compounds composed of a component A which is an organic dibasic acid and a component B which is an oxide, a hydroxide or a salt of the IIA group metals of the Periodic Table; and compositions consisting of a cyclic phosphorous compound and a magnesium compound. Other kinds of the nucleating agent are described in Japanese Patent Application Laid-Open Nos. 2003-306585, 06-289566, and 09-194650.

As examples of the β crystal nucleating agent commercially available, "Enujesuta-NU-100" produced by New Japan Chemical Co., Ltd. is exemplified. As examples of the polypropylene resin to which the β crystal nucleating agent is added, it is possible to list Polypropylene "Bepol B-022SP" produced by Aristech Inc., Polypropylene "Beta (β)-PP BE60-7032" produced by Borealis Inc., and Polypropylene "BNX BETAPP-LN" produced by Mayzo Inc. are listed.

It is necessary to appropriately adjust the mixing ratio of the β crystal nucleating agent to be added to the polypropylene resin according to the kind of the β crystal nucleating agent or the composition of the polypropylene resin. It is favorable to add 0.0001 to 5.0 parts by mass of the β crystal nucleating agent, more favorable to add 0.001 to 3.0 parts by mass thereof, and most favorable to add 0.01 to 1.0 part by mass thereof to 100 parts by mass of the polypropylene resin. When the mixing ratio of the β crystal nucleating agent is not less than 0.0001 parts by mass, it is possible to generate and grow the β crystal sufficiently at a production time, secure the β crystal sufficiently when the laminated porous film is used as the separator for the battery, and obtain desired air-permeable performance. When not more than 5.0 parts by mass of the β crystal nucleating agent is added to the polypropylene resin, economic advantage is obtained, and in addition, the β crystal nucleating agent does not bleed to the surface of the laminated porous film, which is preferable.

In the case where the layer containing the polypropylene resin is layered on the layer other than the layer consisting of the polypropylene resin, the amounts of the β crystal nucleating agent to be contained in the layers may be equal to each other or different from each other. By altering the amount of the β crystal nucleating agent, the porous structure of each layer can be appropriately adjusted.

(Other Components)

In addition to the above-described components, additives to be normally contained in the resin composition may be appropriately added to the polypropylene resin in a range in which they do not outstandingly inhibit the properties of the effect of the present invention. The additives are added to the polypropylene resin to improve and adjust molding processability, productivity, and various properties of the laminated porous film. It is possible to list recycle resin which is generated from trimming loss such as a lug, inorganic particles such as silica, talc, kaolin, calcium carbonate, and the like, pigments such as titanium oxide, carbon black, and the like, a flame retardant, a weathering stabilizer, a heat stabilizer, an antistatic agent, a melt viscosity improving agent, a crosslinking agent, a lubricant, a nucleating agent, plasticizer, an age resistor, an antioxidant, a light stabilizer, an ultraviolet ray absorber, a neutralizing agent, an antifog agent, an anti-blocking agent, a slip agent, and a coloring agent. More specifically, the antioxidant described on pages 154 through 158 of "Plastic compounding agent", the ultraviolet absorbing agent described on pages 178 through 182 thereof, the surface-active agent serving as the antistatic agent described on pages 271 through 275 thereof, and the lubricating agent described on pages 283 through 294 thereof are listed.

(Polyethylene Resin)

In this embodiment, as a porous film to be layered on the porous film consisting of the polypropylene resin, a polyethylene resin porous film is preferably used.
As the polyethylene resin, it is possible to list homopolymer polyethylene such as ultra-low-density polyethylene, low-density polyethylene, high-density polyethylene, linear low-density polyethylene, and ultrahigh-molecular-weight polyethylene characteristic in its molecular weight and in addition, an ethylene-propylene copolymer, and copolymer polyethylene of the polyethylene resin and other polyolefin resins. Of these polyethylene resins, the homopolymer polyethylene and the copolymer polyethylene containing not more than 2 mol% of an α-olefin comonomer are favorable and the homopolymer polyethylene is more favorable. The kind of the α-olefin comonomer is not limited to a specific one.

The density of the polyethylene resin is set to favorably 0.910 to 0.970g/cm$^3$, more favorably 0.930 to 0.970g/cm$^3$, and most favorably 0.940 to 0.970g/cm$^3$. When the density thereof is not less than 0.910g/cm$^3$, the polyethylene resin is capable of having a proper SD property, which is preferable. On the other hand, when the density thereof is not more than 0.970g/cm$^3$, the polyethylene resin is capable of having a proper SD property and in addition maintains stretchability, which is preferable. The density thereof can be measured in accordance with JIS K7112 by using a density gradient tube method.

Although the melt flow rate (MFR) of the polyethylene resin is not specifically limited, the melt flow rate (MFR) thereof is set to favorably 0.03 to 30g/10 minutes and more favorably 0.3 to 10g/10 minutes. When the MFR is not less than 0.03g/10 minutes, the melt viscosity of the resin is sufficiently low at a molding processing time and excellent in productivity, which is preferable. On the other hand, when the MFR is not more than 30g/10 minutes, the polyethylene resin is capable of obtaining a sufficient mechanical strength, which is preferable.
The MFR is measured in accordance with JIS K7210 in the condition where temperature is 230˚C and a load is 2.16kg.

The catalyst for polymerizing the polyethylene resin is not limited to a specific kind, but it is possible to use any of a Ziegler-Natta type catalyst, a Phillips type catalyst, and a Kaminski type catalyst. As methods of polymerizing the polyethylene resin, it is possible to use one-step polymerization, two-step polymerization, and multistep polymerization. It is possible to use the polyethylene resin formed by any of the above-described methods.

(Porousness Acceleration Compound)

It is preferable to add the porousness acceleration compound X which accelerates porousness to the polyethylene resin. By adding the porousness acceleration compound X to the polyethylene resin, it is possible to effectively obtain a porous structure and easily control the configuration and diameter of pores.
The kind of the porousness acceleration compound X is not limited to specific kinds. Modified polyolefin resin, alicyclic saturated hydrocarbon resin, modified substances thereof, ethylene copolymers, and wax are exemplified. It is favorable that the polyethylene resin contains at least one kind selected from among the above-described porousness acceleration compounds X. Of these porousness acceleration compounds X, the alicyclic saturated hydrocarbon resin, the modified substances thereof, the ethylene copolymers, and the wax having a high effect for making an unporous membrane material porous are favorable. The wax is more favorable from the standpoint of moldability.

As the alicyclic saturated hydrocarbon resin and the modified substances thereof, petroleum resin, rosin resin, terpene resin, coumarone resin, indene resin, coumarone-indene resin, and modified substances thereof are listed.

In the present invention, the petroleum resin means aliphatic, aromatic, and copolymerization petroleum resins to be obtained by homo-polymerization or copolymerization of one or not less than two kinds of aliphatic olefins and diolefins with C4 to C10 to be obtained from side products resulting from thermal decomposition of naphtha and aromatic compounds with not less than C8 and olefinically unsaturated bonds.

The petroleum resin includes aliphatic petroleum resin whose main raw material is C5 fraction, aromatic petroleum resin whose main raw material is C9 fraction, copolymerization petroleum resin of the aliphatic petroleum resin and the aromatic petroleum resin, and alicyclic petroleum resin. As the terpene resin, it is possible to exemplify terpene resin and terpene-phenol resin to be obtained from β-pinene. As the rosin resin, it is possible to exemplify rosin resin such as gum rosin, wood rosin, and the like and esterified rosin resin modified with glycerin or pentaerythritol. When alicyclic saturated hydrocarbon resin and modified substances thereof are mixed with the polyethylene resin, they show a comparatively favorable compatibility with the polyethylene resin. The petroleum resin is more favorable from the standpoint of color and thermal stability. To use the hydrogenated petroleum resin is more favorable.

The hydrogenated petroleum resin is obtained by hydrogenating the petroleum resin by conventional methods. For example, hydrogenated aliphatic petroleum resin, hydrogenated aromatic petroleum resin, hydrogenated copolymerization petroleum resin, hydrogenated alicyclic petroleum resin, and hydrogenated terpene resin are listed. Of the hydrogenated petroleum resin, the hydrogenated alicyclic petroleum resin obtained by copolymerizing a cyclopentadiene compound and an aromatic vinyl compound with each other is especially preferable. As the hydrogenated petroleum resin commercially available, "Arkon" (produced by Arakawa Chemical Industries, Ltd.) is exemplified.

In the present invention, the ethylene copolymers mean compounds obtained by copolymerizing ethylene with not less than one kind selected from among vinyl acetate, unsaturated carboxylic acid, unsaturated carboxylic acid anhydride, and carboxylic acid ester.

In the ethylene copolymer, the content ratio of an ethylene monomer unit is favorably not less than 50 parts by mass, more favorably not less than 60 parts by mass, and most favorably not less than 65 parts by mass. The upper limit of the content ratio of the ethylene monomer unit is favorably not more than 95 parts by mass, more favorably not more than 90 parts by mass, and most favorably not more than 85 parts by mass. When the content ratio of the ethylene monomer unit is within the predetermined range, it is possible to form the porous structure more efficiently.

The ethylene copolymer having the MFR (JIS K7210, temperature: 190˚C, load: 2.16kg) not less than 0.1g/10 minutes nor more than 10g/10 minutes is preferably used. When the MFR is not less than 0.1g/10 minutes, extrusion processability can be favorably maintained. On the other hand, when the MFR is not more than 10g/10 minutes, the strength of the film is unlikely to deteriorate, which is preferable.

The ethylene copolymers shown below can be commercially obtained. As an ethylene-vinyl acetate copolymer, "EVAFLEX" (produced by Dupont-Mitsui Polychemicals Co., Ltd.) and "Novatec EVA" (produced by Japan Polyethylene Corporation) are exemplified. As an ethylene-acrylic acid copolymer, "NUC copolymer" (produced by Nippon Unicar Co., Ltd.), "EVAFLEX-EAA" (produced by Dupont-Mitsui Polychemicals Co., Ltd.), and "REXPEARL EAA" (produced by Japan Ethylene Corporation) are exemplified. As an ethylene-(metha)acrylate copolymer, "ELVALOY" (produced by Dupont-Mitsui Polychemicals Co., Ltd.) and "REXPEARL EMA" (produced by Japan Ethylene Corporation) are exemplified. As an ethylene-ethyl acrylate copolymer, "REXPEARL EEA" (produced by Japan Ethylene Corporation) is exemplified. As an ethylene-methyl(metha)acrylate copolymer, "Acryft" (produced by Sumitomo Chemical Co., Ltd.) is exemplified. As an ethylene-vinyl acetate-maleic anhydride terpolymer, "Bondine" (produced by Sumitomo Chemical Co., Ltd.) is exemplified. As an ethylene-glycidyl methacrylate copolymer, an ethylene-vinyl acetate-glycidyl methacrylate terpolymer, and an ethyl-ethyl acrylate-glycidyl methacrylate terpolymer, "Bondfast" (produced by Sumitomo Chemical Co., Ltd.) is exemplified.

In the present invention, the wax is organic compounds satisfying the properties of the following (a) and (b).

    (a) Melting point is 40˚C to 200˚C.
    (b) Melt viscosity at temperature higher than the melting point by 10˚C is not more than 50 Pa·s.

The wax includes polar wax or nonpolar wax, polypropylene wax, polyethylene wax, and wax modifier. More specifically the polar wax, the nonpolar wax, Fischer-Tropsh wax, oxidized Fischer-Tropsh wax, hydroxysteroid wax, functionalized wax, the polypropylene wax, the polyethylene wax, the wax modifier, amorphous wax, carnauba wax, caster· oil wax, microcrystalline wax, beeswax, castor wax, vegetable wax, candelilla wax, Japan wax, ouricury wax, Douglas-fir Bark wax, rice bran wax, jojoba wax, bayberry wax, montan wax, ozokerite wax, ceresin wax, petroleum wax, paraffin wax, chemically modified hydrocarbon wax, substituted amide wax, combinations of these waxes, and derivatives thereof. Of these waxes, the paraffin wax, the polyethylene wax, and the microcrystalline wax are favorable because these waxes allow the porous structure to be formed efficiently. The microcrystalline wax is more favorable because it allows pore diameters to be small, which is preferable for efficiently working the SD property. As the polyethylene wax commercially available, "FT-115" (produced by Nippon Seiro Co., Ltd.) is exemplified. As the microcrystalline wax commercially available, "Hi-Mic" (produced by Nippon Seiro Co., Ltd.) is exemplified.

In forming micropores by peeling the interface of the polyethylene resin and the porousness acceleration compound X, the mixing amount of the porousness acceleration compound X for 100 parts by mass of the polyethylene resin contained in one layer is favorably not less than one part by mass, more favorably not less than five parts by mass, and most favorably not less than 10 parts by mass as the lower limit of the mixing amount thereof. On the other hand, as the upper limit of the mixing amount of the porousness acceleration compound X, the mixing amount thereof is favorably not more than 50 parts by mass, more favorably not more than 40 parts by mass, and most favorably not more than 30 parts by mass. By setting the mixing amount of the porousness acceleration compound X for 100 parts by mass of the polyethylene resin to not less than 1 part by mass, it is possible to obtain a sufficient effect of generating an intended favorable porous structure. By setting the mixing amount of the porousness acceleration compound X for 100 parts by mass of the polyethylene resin to not more than 50 parts by mass, it is possible to secure a more stable moldability.

In addition to the polyethylene resin and the porousness acceleration compound X, thermoplastic resin may be used in a range where the thermal property of the porous film is not inhibited, specifically in a range where the use thereof does not impair porousness of the unporous membrane material. As other thermoplastic resins which can be mixed with the polyethylene resin, styrene resin such as styrene, AS resin, and ABS resin; ester resin such as polyvinyl chloride, fluororesin, polyethylene terephthalate, polybutylene terephthalate, polycarbonate, and polyarylate; ether resin such as polyacetal, polyphenylene ether, polysulfone, polyether sulfone, polyether ether ketone, and polyphenylene sulfide; and polyamide resin such as nylon 6, nylon 6-6, and nylon 6-12 are listed.

A rubber component such as a thermoplastic elastomer may be added to the polyethylene resin as necessary. As the thermoplastic elastomer, it is possible to list styrene·butadiene, polyolefin, urethane, polyester, polyamide, 1,2-polybutadiene, polyvinyl chloride, and ionomer.

In addition to the polyethylene resin and the porousness acceleration compound X, the resin composition may contain additives or other components to be normally contained therein. The additives are used to improve and adjust molding processability, productivity, and various properties of the laminated porous film. It is possible to list recycle resin generated from trimming loss such as a lug, inorganic particles such as silica, talc, kaolin, calcium carbonate, and the like, pigments such as titanium oxide, carbon black, and the like, a flame retardant, a weathering stabilizer, a heat stabilizer, an antistatic agent, a melt viscosity improving agent, a crosslinking agent, a lubricant, a nucleating agent, a plasticizer, an age resistor, an antioxidant, a light stabilizer, an ultraviolet ray absorber, a neutralizing agent, an antifog agent, an anti-blocking agent, a slip agent, and a coloring agent.

Of the above-described additives, the nucleating agent is preferable because it has the effect of controlling the crystal structure of the polyethylene resin and making the porous structure fine when the unporous membrane material is stretched to form pores therein. As examples of the nucleating agent commercially available, "GEL ALL D" (produced by New Japan Science Ltd.), "ADK STAB" (produced by Asahi Denka Co., Ltd.), "Hyperform" (produced by Milliken & Company), and "IRGACLEAR D" (produced by Chiba Specialty Chemicals, Inc.) are listed. As an example of the polyethylene resin to which the nucleating agent is added, "RIKEMASTER" (produced by Riken Vitamin Co., Ltd.) and the like is commercially available.

(Layer Structure of Polyolefin Resin Porous Film)

In the present invention, the polyolefin resin porous film may be composed of a single layer or a plurality of layers laminated one upon another. But it is favorable to compose the polyolefin resin porous film of not less than two layers laminated one upon another. It is more favorable to compose the polyolefin resin porous film of the layer containing the polypropylene resin and the layer containing the polyethylene resin laminated one upon another.

The layer structure of the polyolefin resin porous film is not limited to a specific one, provided that at least one layer (hereinafter referred to as "layer A") containing the polypropylene resin is present in the polyolefin resin porous film. Other layer (hereinafter referred to as "layer B") can be laminated on the layer containing the polypropylene resin within the range in which the layer B does not inhibit the function of the polyolefin resin porous film. A structure in which a strength-holding layer, a heat-resistant layer (high-melting temperature layer), and a shut-down layer (low-melting temperature layer) are laminated one upon another is exemplified. For example, in the case where the polyolefin resin porous film is used as the separator for the lithium ion battery, as described in Japanese Patent Application Laid-Open No. 04-181651, it is preferable to layer the low-melting temperature layer which closes pores in a high-temperature atmosphere and secures the safety of the battery on the layer containing the polypropylene resin.

It is possible to exemplify a two-layer structure composed of the layer A/the layer laminated one upon another and a three-layer structure composed of the layer A/the layer B/the layer A or the layer B/the layer A/the layer B laminated one upon another. It is also possible to form a three-kind three-layer structure by combining a layer having a function different from that of the layer A and that of the layer B with the layer A and the layer B. In this case, the order of layering the layer A, the layer B, and the layer having the function different from that of the layer A and that of the layer B one upon another is not limited to a specific one. It is also possible to increase the number of layers to four layers, five layers, six layers, and seven layers if necessary.

The properties of the polyolefin resin porous film of the present invention can be freely adjusted according to a layer structure, a layering ratio, the composition of each layer, and a production method.

(Method of Producing polyolefin resin porous film]

The method of producing the laminated porous film of the present invention is described below. The present invention is not limited to the laminated porous film to be produced by the production method described below.

The method of producing the unporous membrane material is not limited to a specific method, but known methods may be used. It is possible to exemplify a method of fusing the thermoplastic resin composition by using an extruder, extruding it from a T-die, and cooling it with a cast roll to solidify it. It is also possible to use a method of cutting open the membrane material produced by using a tubular method to make it planar.

The method of stretching the unporous membrane material includes a roll stretching method, a rolling method, a tenter stretching method, and a simultaneous biaxial stretching method. A uniaxial stretching or a biaxial stretching is performed by using one of the above-described methods or in combination of not less than two of the above-described methods. From the standpoint of control of the porous structure, a sequential biaxial stretching is preferable.

In the present invention, in the case where the polyolefin resin porous film is composed of a plurality of layers laminated one upon another, the method of producing the polyolefin resin porous film is classified into the following four methods according to the order of the step at which the unporous membrane material is made porous and the step at which layers are laminated one upon another.

(a) A method of making respective layers porous and thereafter layering the layers which have been made porous one by stacking them upon another or by bonding them to with an adhesive agent or the like.

(b) A method of forming a laminated unporous membrane material by layering the respective layers one upon another and thereafter making the unporous membrane material porous.

(c) A method of making one of the unporous membrane material porous, layering the layer which has been made porous and the other unporous membrane material one upon another, and making the other unporous membrane material porous.

(d) A method of forming porous layers and thereafter layering the formed porous layers one upon another by applying inorganic or organic particles thereto or by evaporating metal particles to form a laminated porous film.

In the present invention, it is preferable to use the method (b) from the standpoint of the simplicity of its process and productivity. To secure the adhesion between two layers, it is especially preferable to form the laminated unporous membrane material by co-extrusion and thereafter make it porous.

The method of producing the polyolefin resin porous film is described in detail below.

Initially a mixed resin composition of the polypropylene resin, the thermoplastic resin, and additives is prepared. The thermoplastic resin and the additives are used as necessary. Materials such as the polypropylene resin, the β nucleating agent, and the additives to be used as desired are mixed with one another by using a Henschel mixer, a super mixer or a tumbler-type mixer. Alternatively all the components are put in a bag and mixed with one another by hand. After the components are fused and kneaded with a uniaxial extruder, a twin screw extruder or a kneader, a mixture is cut to obtain a pellet. It is preferable to use the twin screw extruder.

The pellet is supplied to the extruder and extruded from a co-extrusion mouthpiece of a T-die to form a membrane material. The kind of the T-die is not limited to a special one. When the two-kind three-layer structure is adopted for the laminated porous film of this embodiment of the present invention, it is possible to use both a multi-manifold type for the two-kind three-layer structure and a feed block type for the two-kind three-layer structure.

Although the gap of the T-die to be used is determined according to the thickness of an ultimately necessary film, a stretching condition, a draft ratio, and various conditions, the gap of the T-die is set to normally 0.1 to 3.0mm and favorably 0.5 to 1.0mm. It is unpreferable to set the gap of the T-die to less than 0.1mm from the standpoint of a production speed. When the gap of the T-die is more than 3.0mm, the draft ratio becomes large, which is not preferable from the standpoint of stability in the production of the film.

Although the extrusion processing temperature in the extrusion molding is appropriately adjusted according to the flow property of the resin composition and the moldability thereof, the extrusion processing temperature is set to favorably 180 to 350˚C, more favorably 200 to 330˚C, and most favorably 220 to 300˚C. When the extrusion processing temperature is not less than 180˚C, the fused resin has a sufficiently low viscosity and thus an excellent moldability and improved productivity. On the other hand, by setting the extrusion processing temperature to not more than 350˚C, it is possible to restrain the resin composition from deteriorating and thus the mechanical strength of the laminated porous film to be obtained from lowering.

The temperature at which the resin composition is cooled to solidify it by using the cast roll is very important in the present invention. The ratio of the β crystal of the polypropylene resin contained in the membrane material can be adjusted. The temperature at which the resin composition is cooled to solidify it by means of the cast roll is set to favorably 80 to 150˚C, more favorably 90 to 140˚C, and most favorably 100 to 130˚C. By setting the temperature at which the resin composition is cooled to solidify it to not less than 80˚C, the ratio of the β crystal contained in the membrane material can be sufficiently increased, which is preferable. By setting the temperature at which the resin composition is cooled to solidify it to not more than 150˚C, it is possible to restrain the occurrence of a trouble that extruded fused resin adheres to the cast roll and sticks thereto. Thus it is possible to efficiently process the resin composition into the membrane material, which is preferable.

By setting the temperature of the cast roll to the above-described temperature range, the ratio of the β crystal of the polypropylene resin of the unstretched membrane material is set to 20 to 100%, favorably to 40 to 100%, more favorably to 50 to 100%, and especially favorably to 60 to 100%. By setting the ratio of the β crystal of the unstretched membrane material to not less than 30%, it is easy to make the unstretched membrane material porous by a stretching operation to be performed at a later step. Thereby it is possible to obtain the polyolefin resin porous film having an excellent air-permeable property.

By using the differential scanning calorimeter, the ratio of the β crystal of the polypropylene resin of the unstretched membrane material is computed based on the following equation by using the crystal melting heat amount ($\Delta Hm\alpha$) derived from the α crystal of the polypropylene resin (A) and the crystal melting heat amount ($\Delta Hm\beta$) derived from the β crystal detected when the temperature of the membrane material is raised from 25˚C to 240˚C at a heating speed of 10˚C/minute.

$$\text{Ratio (\%) of β crystal} = [\Delta Hm\beta/(\Delta Hm\beta + \Delta Hm\alpha)] \times 100$$

At the stretching step, the membrane material may be uniaxially stretched in a length direction thereof or in a width direction thereof or biaxially stretched. In performing the biaxial stretching, simultaneous biaxial stretching or sequential biaxial stretching may be performed. In forming the polyolefin resin porous film of the present invention, the sequential biaxial stretching is more favorable than the simultaneous biaxial stretching because the sequential biaxial stretching allows a stretching condition to be selected at each stretching step and the porous structure to be easily controlled.

The longitudinal direction of the membrane material and that of the film are called a "length direction", whereas a direction vertical to the longitudinal direction is called a "width direction". Stretching in the longitudinal direction thereof is called "length-direction stretching", whereas stretching in the direction vertical to the longitudinal direction is called "width-direction stretching".

In the case where the sequential biaxial stretching is used, it is preferable to select a stretching temperature within the range of conditions shown below, although it is necessary to appropriately select the stretching temperature according to the composition and crystallization state of the resin composition to be used.

In the case where the sequential biaxial stretching is used, it is necessary to vary the stretching temperature according to the composition, crystal melting peak temperature, and crystallization degree of the resin composition to be used. The stretching temperature in the length-direction stretching is controlled in the range of favorably 0 to 130˚C, more favorably 10 to 120˚C, and most favorably 20 to 110˚C. The length-direction stretching ratio is set to favorably 2 to 10 times, more favorably 3 to 8 times, and most favorably 4 to 7 times longer than the original length of the membrane material. By performing the length-direction stretching within the above-described range, it is possible to restrain breakage at a stretching time and generate a proper starting point of pores.

On the other hand, the stretching temperature in the width-direction stretching is set to 100 to 160˚C, favorably 110 to 150˚C, and most favorably 120 to 140˚C. The width-direction stretching ratio is set to favorably 2 to 10 times, more favorably 3 to 8 times, and most favorably 4 to 7 times longer than the original length of the membrane material.

By performing the width-direction stretching in the above-described range, it is possible to moderately enlarge the starting point of the pores formed by the length-direction stretching and generate a fine porous structure.

The stretching speed at steps where the above-described length-direction stretching and width-direction stretching are performed is set to favorably 500 to 12000%/minute, more favorably 1500 to 10000%/minute, and most favorably 2500 to 8000%/minute.

To improve the dimensional stability of the porous film obtained in the above-described manner, it is preferable to heat-treat it. By setting the heat treatment temperature to favorably not less than 100˚C, more favorably not less than 120˚C, and most favorably not less than 140˚C, the effect of the dimensional stability can be expected. On the other hand, the heat treatment temperature is set to favorably not more than 170˚C, more favorably not more than 165˚C, and most favorably not more than 160˚C. When the heat treatment temperature is not more than 170˚C, the polypropylene is unlikely to be melted by the heat treatment and thus the porous structure can be maintained, which is preferable.

Relaxation treatment may be performed at 1 to 20% as necessary while the heat treatment step is being performed. By uniformly cooling the porous film and winding after it is heat-treated, the porous film of the present invention is obtained.

(Heat-Resistant Layer)

A heat-resistant layer containing the filler and the resin binder is layered on at least one surface of the polyolefin resin porous film.

(Filler)

The filler which can be used in the present invention includes an inorganic filler and an organic filler and is not limited to specific ones.

As examples of the inorganic filler, carbonates such as calcium carbonate, magnesium carbonate, and barium carbonate; sulfates such as calcium sulfate, magnesium sulfate, barium sulfate; chlorides such as sodium chloride, calcium chloride, and magnesium chloride; oxides such as aluminum oxide, calcium oxide, magnesium oxide, zinc oxide, titanium oxide, and silica; and silicates such as talc, clay, and mica. Of these inorganic fillers, the barium sulfate and the aluminum oxide are preferable.

As examples of the organic filler, it is possible to list thermoplastic resins such as ultra-high-molecular-weight polyethylene, polystyrene, polymethyl methacrylate, polycarbonate, polyethylene terephthalate, polybutylene terephthalate, polyphenylene sulfide, polysulfone, polyethersulfone, polyether ether ketone, polytetrafluoroethylene, polyimide, polyetherimide, melamine, benzoguanamin; and thermosetting resins. Of these organic fillers, the crosslinked polystyrene is especially preferable.

The average particle diameter of the filler is favorably not less than $0.1\mu m$, more favorably not less than $0.2\mu m$, and most favorably not less than $0.3\mu m$. The upper limit of the average particle diameter thereof is favorably not more than $3.0\mu m$ and more favorably not more than $1.5\mu m$. It is preferable to set the average particle diameter thereof to not less than $0.1\mu m$ from the standpoint that the laminated porous film is unlikely to be broken owing to a decrease in the shrinkage factor thereof and from the standpoint that the heat resistance thereof is achieved. It is preferable to set the average particle diameter of the laminated porous film to not more than $3.0\mu m$ from the standpoint that the laminated porous film is unlikely to be broken owing to a decrease in the shrinkage factor thereof. It is preferable to set the average particle diameter thereof to not more than $1.5\mu m$ from the standpoint that the porous layer having a small thickness is favorably formed and from the standpoint that the inorganic filler is favorably dispersed in the porous layer.
In this embodiment, "the average particle diameter of the inorganic filler" is a value measured in conformity to the method of using SEM.

In the heat-resistant layer, the ratio (hereinafter referred to as "F%") of the filler to the total of the amount of the filler and that of the resin binder is favorably not less than 92 mass%, more favorably not less than 95 mass%, and most favorably not less than 98 mass%. When F% is not less than 92 mass%, it is possible to produce the intercommunicable laminated porous film which shows an excellent air-permeable performance, which is preferable.

(Resin Binder)

Resin binders which can be used in the present invention are not limited to specific kinds, provided that they are capable of favorably bonding the filler and the polyolefin resin porous film, electrochemically stable, and stable for an organic electrolytic solution when the laminated porous film is used as the separator for the battery. Specifically an ethylene-vinyl acetate copolymer (EVA, structural unit derived from vinyl acetate is 20 to 35 mol%), an ethylene-acrylic acid copolymer such as an ethylene-ethyl acrylic acid copolymer, fluororesin [polyvinylidene fluoride (PVDF) and the like], fluororubber, styrene-butadiene rubber (SBR), nitrile butadiene rubber (NBR), polybutadiene rubber (BR), polyacrylonitrile (PAN), polyacrylic acid (PAA), carboxymethyl cellulose (CMC), hydroxyethyl cellulose (HEC), polyvinyl alcohol (PVA), polyvinyl butyral (PVB), polyvinyl pyrrolidone (PVP), poly(N-vinylacetamide), crosslinked acrylic resin, polyurethane, and epoxy resin are listed. These organic binders can be used singly or in combination of not less than two kinds thereof. Of these organic binders, the polyvinyl alcohol, the polyvinylidene fluoride, the styrene-butadiene rubber, the carboxymethyl cellulose, and the polyacrylic acid are preferable.

(Method of Producing Heat-Resistant Layer)

In the laminated porous film of an embodiment of the present invention, the heat-resistant layer is formed on the surface of the porous film by applying a filler-containing resin solution (dispersion solution) in which the filler and the resin binder are dissolved or dispersed in a solvent to at least one surface of the polyolefin resin porous film.

As the solvent, it is preferable to use solvents in which the filler and the resin binder can be uniformly and stably dissolved or dispersed. As such solvents, it is possible to list N-methyl pyrrolidone, N-dimethyl formaldehyde, N,N-dimethylacetamide, water, ethanol, toluene, thermal xylene, and hexane. To stabilize an inorganic filler-containing resin solution or improve the performance of applying the inorganic filler-containing resin solution to the polyolefin resin porous film, various additives including a dispersing agent such as a surface-active agent, a thickener, a wetting agent, an antifoam agent, a pH preparation agent including acid or alkali may be added to the dispersion solution. It is preferable that these additives can be removed from the dispersion solution at a solvent removal time and at a plasticizer extraction time. Those which are electrochemically stable in the range of use of the lithium-ion secondary battery, do not inhibit a battery reaction, and stable up to about 200°C may remain in the battery (in the laminated porous film).

As methods of dissolving or dispersing the filler and the resin binder in the solvent, mechanical stirring methods to be carried out by using a ball mill, a bead mill, a planetary ball mill, a vibration ball mill, a sand mill, a colloid mill, an attritor, a roll mill, a high-speed impeller dispersion, a disperser, a homogenizer, a high-speed impact mill, ultrasonic dispersion, and a stirring blade are listed.

A method of applying the dispersion liquid to the surface of the polyolefin resin porous film is not restricted to a specific method, provided that the method is capable of achieving a necessary layer thickness and dispersion liquid-applied area. The method of applying the dispersion liquid to the surface of the polyolefin resin porous film includes a gravure coating method, a small-diameter gravure coating method, a reverse roll coating method, a transfer roll coating method, a kiss coating method, a dip coating method, a knife coating method, an air doctor coating method, a blade coating method, a rod coating method, a squeeze coating method, a cast coating method, a die coating method, a screen printing method, and a spray applying method. The dispersion liquid may be applied to one surface of the polyolefin resin porous film or both surfaces thereof according to use.

As the above-described solvent, a solvent which can be removed from the dispersion solution applied to the polyolefin resin porous film is preferable. As the method of removing the solvent from the dispersion solution, methods which do not adversely affect the polyolefin resin porous film can be adopted without restriction. As the method of removing the solvent from the dispersion solution, a method of drying the polyolefin resin porous film at temperatures not more than its melting point with the polyolefin resin porous film being fixed, a method of drying the polyolefin resin porous film at low temperatures and under a reduced pressure, and a method of immersing the polyolefin resin porous film in a poor solvent for a resin binder to coagulate the resin binder and at the same time extract the solvent are listed.

It is possible to produce the laminated porous film of the present invention composed of the polyolefin resin porous film and the heat-resistant layer layered on the surface thereof by using methods different from the above-described producing method. For example, it is possible to adopt a method of supplying a material of the polyolefin resin porous film to one extruder, supplying a material of the heat-resistant layer to other extruder, molding the materials into a laminated membrane material after integrating them with each other with one die, and thereafter performing the process of making the laminated unporous membrane material porous.

(Configuration and Property of Laminated Porous Film)

As described above, the thickness of the laminated porous film of the present invention is favorably 5 to 100μm. The thickness thereof is more favorably 8 to 50μm and most favorably 10 to 30μm. In the case where the laminated porous film is used as the separator for the battery, when the thickness thereof is not less than 5μm, it is possible to obtain substantially necessary electrical insulating property. For example, even though a great force is applied to a projected portion of an electrode, the projected portion thereof is unlikely to cut through the separator for the battery and be short-circuited. Thus the laminated porous film having a thickness in the above-described range is excellent in safety. When the thickness of the laminated porous film is not more than 100μm, it is possible to decrease the electric resistance thereof and thus sufficiently secure the performance of the battery.

To improve the heat resistance of heat-resistant layer, the thickness thereof is not less than 0.5μm, favorably not less than 2μm, more favorably not less than 3μm, and most favorably not less than 4μm. From the standpoint that the heat-resistant layer has permeation property and that the battery has a high capacitance, the upper limit of the thickness of the heat-resistant layer is not more than 90μm, favorably not more than 50μm, more favorably not more than 30μm, and most favorably not more than 10μm.

The porosity of the laminated porous film of the present invention is preferably 30% to 70%, as described above. When the porosity thereof is not less than 30%, the laminated porous film to be obtained secures the intercommunicable property and is excellent in its air-permeable property. When the porosity thereof is not more than 70%, the strength thereof is unlikely to deteriorate, which is preferable from the standpoint of handling the laminated porous film.

As described above, the air permeability of the laminated porous film of the present invention measured in accordance with JIS P8117 is set to not more than 2000 seconds/100ml.

By setting the air permeability of the laminated porous film used as the separator for the battery after it is heated at 135°C for five seconds to not less than 10000 seconds/100ml to impart the SD property to the laminated porous film, pores are rapidly closed, and the flow of electric current is shut off in case of the generation of abnormal heat. Thereby it is possible to avoid the occurrence of troubles of the battery such as rupture.

As described above, it is important that the coefficient of static friction of the surface of the heat-resistant layer of the laminated porous film of the present invention is set to not more than 0.45. By setting the coefficient of static friction of the surface of the heat-resistant layer to not more than 0.45, battery elements wound round the pin can be pulled out of it without deforming its shape when the laminated porous film is used as the separator for the battery. The coefficient of static friction is measured by the method described in the examples described later.

As described above, it is important that the tensile modulus of the elasticity of the laminated porous film of the present invention is set to 400 to 1000 MPa when it is elongated by 3% in its longitudinal direction. By setting the tensile modulus of elasticity of the laminated porous film to not less than 400 MPa when the laminated porous film is elongated by 3%, in winding and transporting the laminated porous film used as the separator for the battery, the laminated porous film is elongated and a problem that the laminated porous film wrinkles does not occur. Therefore the laminated porous film can be preferably used. From the standpoint that the laminated porous film has flexibility and can be handled easily, the tensile modulus of elasticity thereof is not more than 1000 MPa when it is elongated by 3%. The tensile modulus of elasticity of the laminated porous film when it is elongated by 3% is measured by the measuring method described in the examples described later.

The shrinkage factor of the laminated porous film of the present invention at 150°C is set to favorably not more than 10%, as described above to allow the laminated porous film to have a favorable dimensional stability and prevent it from being broken even when heat is abnormally generated at a temperature higher than the SD temperature so that an internal short-circuit temperature can be improved. Although the lower limit of the shrinkage factor thereof is not limited to a specific value, the lower limit of the shrinkage factor thereof is more favorably not less than 2%.

(Battery)

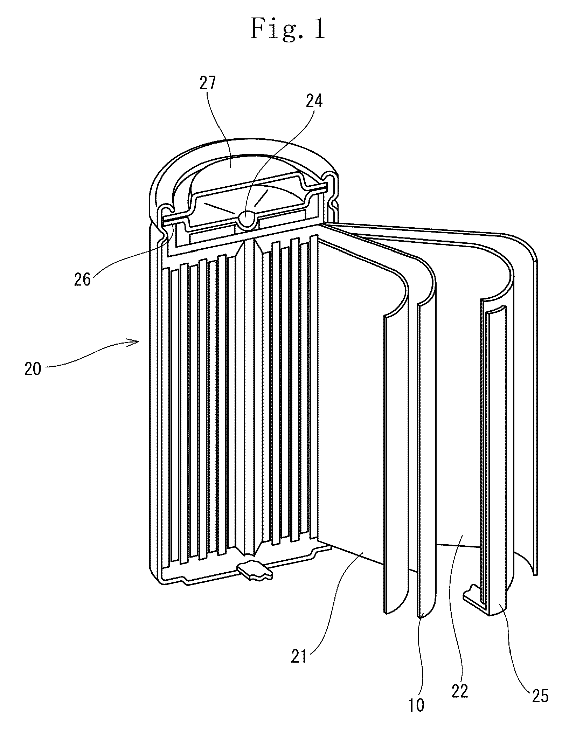

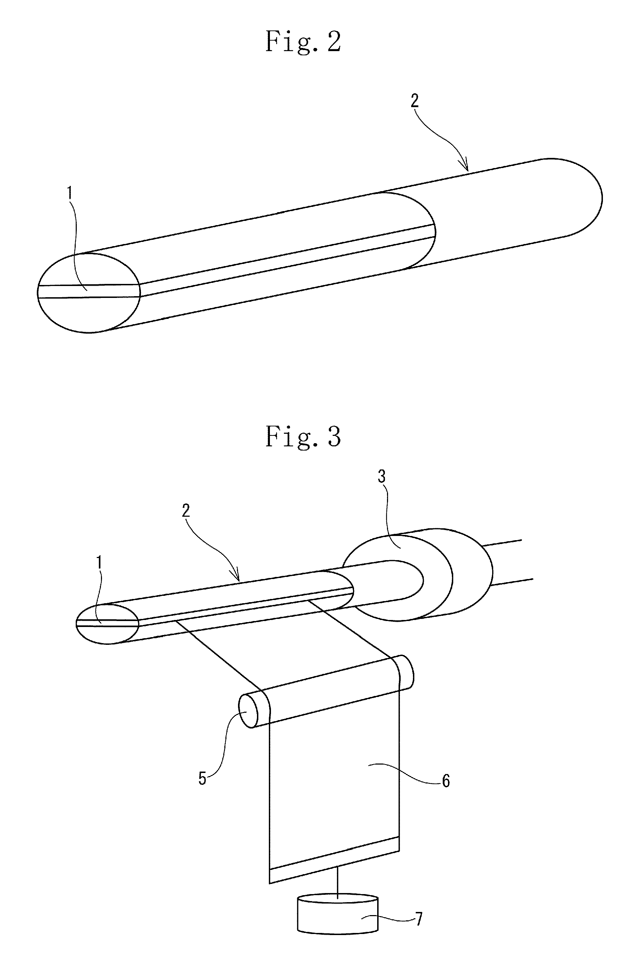

A nonaqueous electrolyte battery accommodating the laminated porous film of the present invention as the separator thereof is described below with reference to Fig. 1. Both a positive electrode plate 21 and a negative electrode plate 22 are spirally wound in such a way that the positive electrode plate 21 and the negative electrode plate 22 are overlapped each other via a separator 10. The outer side of the positive electrode plate 21 and that of the negative electrode plate 22 are fixed with a tape to hold the wound the positive electrode plate 21, negative electrode plate 22, and separator 10 together as a unit. In the winding step, as shown in Fig. 2, one end of the separator for the battery is passed through a slit portion 1 of a pin 2. Thereafter the pin 2 is rotated slightly to wind the other end of the separator for the battery round the pin 2. At this time, the surface of the pin 2 and the heat-resistant layer of the separator for the battery are in contact with each other. Thereafter the positive electrode and the negative electrode are so arranged as to sandwich the separator for the battery therebetween. The pin 2 is rotated to wind the positive electrode and the separator for the battery by means of a winding machine. After the winding operation finishes, the pin 2 is pulled out of the wound positive electrode plate, negative electrode plate, and separator held together as a unit.

The wound positive electrode plate 21, separator 10, and negative electrode plate 22 held together as a unit are accommodated inside a bottomed cylindrical battery case and welded to a positive lead 24 and a negative lead 25. Thereafter the electrolyte is injected to a battery can. After the electrolyte penetrates into the separator 10 sufficiently, the periphery of the opening of the battery can is sealed with a positive lid 27 via a gasket 26. Thereafter preparatory charge and aging are carried out to produce a cylindrical secondary nonaqueous electrolyte battery 20.

A lithium salt is dissolved in an organic solvent to obtain the electrolyte. Although the organic solvent is not limited to a specific kind, esters such as propylene carbonate, ethylene carbonate, butylene carbonate, γ-butyrolactone, γ-valerolactone, dimethyl carbonate, methyl propionate, and butyl acetate; nitriles such as acetonitrile; ethers such as 1,2-dimethoxyethane, 1,2-dimethoxymethane, dimethoxypropane, 1,3-dioxolane, tetrahydrofuran, 2-methyltetrahydrofuran, and 4-methyl-1,3-dioxofuran; and sulfolane. These organic solvents can be used singly or in combination of not less than two kinds thereof. It is preferable to use an electrolyte in which 1.0 mol/L of lithium phosphate hexafluoride ($LiPF_6$) is dissolved in a solvent containing two parts by mass of the methyl ethyl carbonate mixed with one part by mass of the ethylene carbonate.

As the negative electrode, an alkali metal or a compound containing the alkali metal integrated with a current collector such as a net made of stainless steel is used. As the alkali metal, lithium, sodium or potassium is used. As the compound containing the alkali metal, alloys of the alkali metal and aluminum, lead, indium, potassium, cadmium, tin or magnesium; compounds of the alkali metal and a carbon material; and compounds of the alkali metal having a low electric potential and metal oxides or sulfides are listed. In using the carbon material for the negative electrode, it is possible to use those capable of doping or de-doping lithium ions. For example, it is possible to use graphite, pyrolytically decomposed carbons, cokes, glassy carbons, calcined organic polymeric compounds, mesocarbon microbead, carbon fiber, and activated carbon.

A negative electrode plate produced as follows is used in this embodiment. A carbon material having an average particle diameter of 10µm is mixed with a solution in which vinylidene fluoride is dissolved in N-methylpyrrolidone to obtain slurry. After the slurry consisting of the mixture of the above-described substances to form the negative electrode is passed through a 70-mesh net to remove large particles, the slurry is uniformly applied to both surfaces of a negative electrode current collector consisting of a belt-shaped copper foil having a thickness of 18µm and is dried. After the slurry is compression-molded with a roll press machine, the molding is cut to obtain the belt-shaped negative electrode plate.

As the positive electrode, metal oxides such as lithium cobalt oxide, lithium nickel oxide, lithium manganese oxide, manganese dioxide, vanadium pentoxide or chromium oxide and metal sulfides such as molybdenum disulfide are used as an active substance. A conductive assistant and a binding agent such as polytetrafluoroethylene are added to the positive active substance to obtain a combination of these substances. Thereafter the combination of these substances is processed into a molding by using a current collector such as stainless steel net as the core thereof. The molding formed in this manner is used as the positive electrode.

In this embodiment, as the positive electrode, a belt-shaped positive electrode plate produced as described below is used. That is, as a conductive assistant, scaly graphite is added to the lithium cobalt oxide ($LiCoO_2$) at a mass ratio of lithium cobalt oxide : scaly graphite = 90 : 5. Both substances are mixed with each other to form a mixture. The mixture and a solution in which the polyvinylidene fluoride is dissolved in the N-methylpyrrolidone are mixed with each other to obtain slurry. After the slurry consisting of the mixture of these substances to form the positive electrode is passed through the 70-mesh net to remove large particles, the slurry is uniformly applied to both surfaces of a positive current collector consisting of an aluminum foil having a thickness of 20µm and dried.
After the slurry is compression-molded with the roll press machine, the molding is cut to obtain the belt-shaped positive electrode plate.

EXAMPLES

Examples and comparison examples are shown below. Although the laminated porous film of the present invention is described in detail below, the present invention is not limited thereto. The longitudinal direction of the laminated porous film is called the "length direction", and the direction vertical to the longitudinal direction is called the "width direction".

(1) Film Thickness

The in-plane thickness of each laminated porous film was measured at unspecified 30 points with a dial gauge of 1/1000mm. The average of the measured values was set as the film thickness.

(2) F%

F% means the ratio of the amount of the filler to the total of the amount of the filler and that of the resin binder.

(3) Coefficient of Static Friction

The coefficient of static friction was measured in accordance with JIS K7125 based on the results obtained by measuring the surface of a SUS and that of the heat-resistant layer of the laminated porous film.

(4) Pin extraction properties

By using an apparatus shown in Fig. 3, samples 6 each consisting of two laminated porous films obtained by cutting a material rectangularly in the dimension of 5000mm long and 580mm wide were layered one upon another. After one end of each sample was inserted into a slit portion 2 of a pin 2 shown in Fig. 3 and wound round a rotating roller part 5, a weight 7 of 4.3N was hung from the opposite end of the sample to fix the laminated porous film. Thereafter the laminated porous films were wound round the pin 2 at a speed of 0.6m/minute in such a way that the heat-resistant layer is disposed at the inner side of the laminated porous film. Thereafter the laminated porous films were fixed with a scotch tape.
After the pin 2 was taken out of the apparatus, the laminated porous films wound round the pin 2 were pulled out therefrom by means of a flange 3.
The above-described operation was repeated four times to evaluate the performance of pulling the battery elements from the pin based on a criterion for judgment shown below. Laminated porous films marked by ⊚ were evaluated as acceptable.

◎: pulled out of the pin not less than three times.

Δ: pulled out of the pin two times.

×: pulled out of the pin not more than once.

(5) Tensile Modulus of Elasticity of Specimen Stretched at Rate of 3%

In accordance with JIS K7127, the tensile modulus of elasticity of the laminated porous film of each of the examples and the comparison examples was measured in the length direction thereof in a condition of 23˚C by using a universal testing machine produced by INTESCO CO., LTD. After each laminated porous film was cut to obtain a strip specimen 200mm long and 5mm wide, the distance between chucks was set to 150mm. The tensile modulus of elasticity of each laminated porous film was measured when the laminated porous film was elongated in its length direction by 3% at a pulling rate of 200mm/minute.

(6) Air Permeability (Gurley value)

The air permeability (second/100ml) of each specimen was measured in accordance with JIS P8117.

(7) SD Property (air permeability after specimen is heated at 135˚C for five seconds)

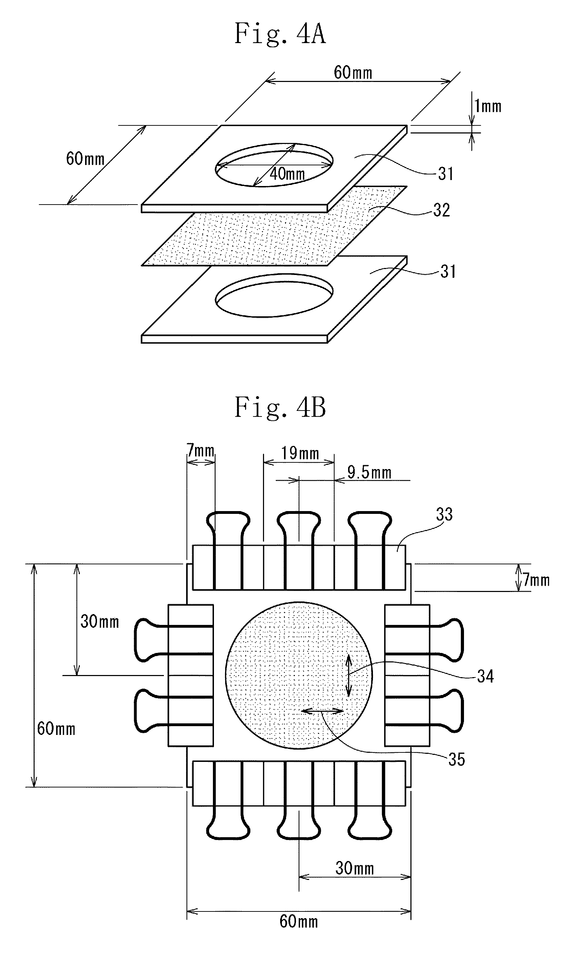

Each laminated porous film 32 was cut square in the dimension of 60mm long and 60mm wide. As shown in Fig. 4(A), each laminated porous film was sandwiched between two aluminum plates (material: JIS A5052, size: 60mm in the length direction 34 of the film, 60mm in the width direction 35 thereof, and 1mm in the thickness thereof) 31 where a circular hole having a diameter of Ø40mm was formed at the central portion. As shown in 4(B), the periphery of the laminated porous film 32 was fixed with clips 33.

Thereafter each sample fixed with the two aluminum plates was immersed at a central portion of an oil bath, (OB-200A produced by Azuwan Co., Ltd.) having a temperature of 135˚C, in which glycerin (first class produced by Nacalai Tesque Inc.) was filled up to 100mm from its bottom surface. Each sample was heated for five seconds. Immediately after the heating finished, each sample was immersed in a cooling bath in which separately prepared glycerin having a temperature of 25˚C was filled to cool it for five minutes. After each sample was cleaned with 2-propanol (high grade produced by Nacalai Tesque Inc.) and acetone (high grade produced by Nacalai Tesque Inc.), each sample was dried for 15 minutes in an air atmosphere having a temperature of 25˚C. The air permeability of each of the dried samples was measured in accordance with the method used in the above-described method (6).

(8) Shrinkage Factor at 150˚C

Each laminated porous film was cut rectangularly to obtain a sample 150mm long and 30mm wide. A marker was put on each of sample-chucked positions spaced at 100mm. Each sample was sandwiched between aluminum foils to prevent it from being exposed to the wind and put in an oven (Tabai gear oven "GPH200" produced by Tabai Espec Corporation) the temperature of which was set to 150˚C. Each sample was allowed to stand for one hour. After each sample was taken out of the oven and cooled, the length thereof was measured. The shrinkage factor of each sample in the length direction (MD) thereof and that in the width direction (TD) thereof were measured by using the following equation.

$$\text{Shrinkage factor (\%)} = \{(100 - \text{length after heating})/100\} \times 100$$

The β activity of each of the obtained laminated porous films was evaluated as follows:

(9) Measurement of Differential Scanning Calorimetry (DSC)

By using a differential scanning calorimeter (DSC-7) produced by PerkinElmer Inc., each of the obtained laminated porous films was heated from 25˚C up to 240˚C at a scanning speed of 10˚C/minute and held for one minute. Thereafter the laminated porous films were cooled from 240˚C down to 25˚C at the scanning speed of 10˚C/minute and held for one minute. Thereafter the laminated porous films were heated again from 25˚C up to 240˚C at the scanning speed of 10˚C/minute. When the laminated porous films were heated again, whether the β activity was present or not was evaluated based on the following standard according to whether a peak was detected in the range of 145˚C to 160˚C which is the crystal melting peak temperature (Tmβ) derived from the β crystal of the polypropylene resin.

○: samples in which Tmβ was detected in the range of 145˚C to 160˚C (β activity was present).
×: Samples in which Tmβ was not detected in the range of 145˚C to 160˚C (β activity was not present).

The β activity was measured on samples having a weight of 10mg in a nitrogen atmosphere.

(10) Wide-Angle X-ray Diffraction Measurement (XRD)

Each laminated porous film was cut square in the dimension of 60mm long and 60mm wide. As shown in Fig. 4(A), each laminated porous film was sandwiched between two aluminum plates (material: JIS A5052, size: 60mm long, 60mm wide, 1mm thick) where a circular hole having a diameter of Ø40mm was formed at a central portion. As shown in 4(B), the periphery of the laminated porous film was fixed with clips.
Each sample, consisting of the laminated porous film, which was fixed to two aluminum plates was put in a blow isothermal instrument (Model: DKN602 produced by Yamato Science Corporation) having a set temperature of 180˚C and a display temperature of 180˚C. After each sample was held therein for three minutes, the set temperature was altered to 100˚C, and the sample was gradually cooled to 100˚C for not less than 10 minutes. When the display temperature became 100˚C, the sample was taken out of the blow isothermal instrument. The sample was cooled for five minutes in an atmosphere having a temperature of 25˚C with the sample being fixed to the two aluminum plates. Thereafter wide-angle X-ray diffraction measurement was carried out on a circular central portion, of the sample, having a diameter of Ø40mm in the following measuring conditions.

· Wide-angle X-ray diffraction measuring apparatus: Model Number: XMP18A produced by Mac science Co., Ltd.
· X-ray source: CuK α-ray, output: 40kV, 200mA
· Scanning method: 2θ/θ scan, 2θ range: 5˚ to 25˚, scanning interval: 0.05˚, scanning speed: 5˚/minute

Obtained diffraction profiles were examined to evaluate the presence and nonpresence of the β activity from a peak derived from the (300) surface of the β crystal of the polypropylene resin.

○: Samples in which the peak was detected in the range of 2θ = 16.0˚ to 16.5˚ (film had β activity)
×: Samples in which the peak was not detected in the range of 2θ = 16.0˚ to 16.5˚ (film did not have β activity)

When the laminated porous film cannot be cut in the dimension of 60mm long and 60mm wide, specimens may be prepared by placing the laminated porous film at the circular hole, having the diameter of Ø40mm, which is disposed at the central portion of the aluminum plate.

(11) Property of Separator

Laminated porous films which satisfied all of conditions shown below were evaluated as ◎, whereas those which did not satisfy any one of them were evaluated as ×.

1. Air permeability: 1 to 2,000 seconds/100ml
2. SD property: not less than 10,000 seconds/100ml
3. Shrinkage factor at 150˚C: not more than 10% in both the length direction of the laminated porous film and the width direction thereof
4. Pin extraction properties: ◎

Example 1

(Polypropylene Resin Film)

As a layer A, polypropylene resin ("F300SV" produced by Prime Polymer Corporation, density: 0.90g/cm$^3$, MFR: 3.0g/10 minutes) and N,N'-dicyclohexyl-2,6-naphthalene dicarboxylic amide serving as the β crystal nucleating agent were prepared. 0.2 parts by mass of the β crystal nucleating agent was blended with 100 parts by mass of the polypropylene resin. After the components were supplied to a same direction twin screw extruder (diameter: 40mmØ, L/D: 32) produced by Toshiba Machine Co., Ltd and fused and mixed with each other at a set temperature of 300˚C, a strand was cooled and solidified in a water bath and cut by a pelletizer to prepare a pellet of a polypropylene resin composition. The β activity of the polypropylene resin composition was 80%.

Thereafter as the mixed resin composition composing a layer B, 0.04 parts by mass of glycerol monoester and 10 parts by mass of microcrystalline wax ("Hi-Mic 1080" produced by Nippon Seiro Co., Ltd.) were added to 100 parts by mass of high-density polyethylene (Novatec HD HF560 produced by Japan Polyethylene Corporation, density: 0.963g/cm$^3$, MFR: 7.0g/10 minutes). The above-described three components were fused and kneaded at 220°C by using the same direction twin screw extruder used to form the layer A to obtain a pelletized resin composition.

The above-described two kinds of the materials were extruded from mouthpieces for lamination molding through the feed block for the two-kind three-layer structure by using different extruders in such a way that the outer layer of the laminated membrane material to be obtained consisted of the layer A and the intermediate layer thereof consisted of the layer B. Thereafter the materials were cooled to solidify them by using a cast roll having a temperature of 124°C to prepare a two-kind three-layer laminated membrane material consisting of the layer A/the layer B/the layer A. The laminated membrane material was stretched 4.6 times longer than its original length in its length direction by using a lengthwise stretching machine and stretched 1.9 times longer than its original length in its width direction by using a widthwise stretching machine at 98°C. Thereafter the laminated membrane material was subjected to heat fixation/ relaxation treatment. As a result, a laminated porous film composed of the polyolefin resin having a thickness of 20µm and an air permeability of 450 seconds/100ml was obtained.

The obtained laminated porous film composed of the polyolefin resin was subjected to corona surface treatment by using a corona treatment apparatus (produced by KASUGA ELECTRIC WORKS LTD., line speed: 50m/minute, treatment output: 2kW).

Heat-Resistant Layer

25.5 parts by mass of barium sulfate (B-35T produced by Sakai Chemical Co., Ltd., average particle diameter: 0.3µm) and 0.5 parts by mass of polyvinyl alcohol (PVA120 produced by Kuraray Co., Ltd., saponification degree: 98.0 to 99.0, average degree of polymerization: 2000) were dispersed in a mixed solution of 66.6 parts by mass of water and 7.4 parts by mass of 2-propanol to obtain a dispersion solution. After the obtained dispersion solution was applied to a corona treatment surface of the porous film by using a gravure coater, the obtained dispersion solution was dried at 75°C. The properties of the obtained laminated porous film were evaluated. The results are shown in table 1.

[Example 2]

39.2 parts by mass of alumina (Sumicorundum AA-03 produced by Sumitomo Chemical Co., Ltd., average particle diameter: 0.3µm) and 0.8 parts by mass of the polyvinyl alcohol (PVA120 produced by Kuraray Co., Ltd., saponification degree: 98.0 to 99.0, average degree of polymerization: 2000) were dispersed in 60.0 parts by mass of water to obtain a dispersion solution. After the obtained dispersion solution was applied by using the gravure coater to the corona treatment surface of the laminated porous film, composed of the polyolefin resin, produced in the example 1, the obtained dispersion solution was dried at 75°C. The properties of the obtained laminated porous film were evaluated. The results are shown in table 1.

[Example 3]

38.0 parts by mass of the alumina (Sumicorundum AA-03 produced by Sumitomo Chemical Co., Ltd., average particle diameter: 0.3µm) and 2.0 parts by mass of the polyvinyl alcohol (PVA120 produced by Kuraray Co., Ltd., saponification degree: 98.0 to 99.0, average degree of polymerization: 2000) were dispersed in 60.0 parts by mass of water to obtain a dispersion solution. After the obtained dispersion solution was applied by using the gravure coater to the corona treatment surface of the laminated porous film, composed of the polyolefin resin, produced in the example 1, the obtained dispersion solution was dried at 75°C. The properties of the obtained laminated porous film were evaluated. The results are shown in table 1.

[Comparison Example 1]

23.4 parts by mass of the barium sulfate (B-35T produced by Sakai Chemical Co., Ltd., average particle diameter: 0.3µm) and 2.6 parts by mass of polyvinyl alcohol (PVA120 produced by Kuraray Co., Ltd., saponification degree: 98.0 to 99.0, average degree of polymerization: 2000) were dispersed in a mixed solution of 66.6 parts by mass of water and 7.4 parts by mass of 2-propanol to obtain a dispersion solution. After the obtained dispersion solution was applied by using the gravure coater to the corona treatment surface of the laminated porous film, composed of the polyolefin resin, produced in the example 1, the obtained dispersion solution was dried at 75°C. The properties of the obtained laminated porous film were evaluated. The results are shown in table 1.

[Comparison Example 2]

36.0 parts by mass of the alumina (Sumicorundum AA-03 produced by Sumitomo Chemical Co., Ltd., average particle diameter: 0.3μm) and 4.0 parts by mass of the polyvinyl alcohol (PVA120 produced by Kuraray Co., Ltd., saponification degree: 98.0 to 99.0, average degree of polymerization: 2000) were dispersed in 60.0 parts by mass of water to obtain a dispersion solution. After the obtained dispersion solution was applied by using the gravure coater to the corona treatment surface of the laminated porous film, composed of the polyolefin resin, which was produced in the example 1, the obtained dispersion solution was dried at 75°C.
The properties of the obtained laminated porous film were evaluated. The results are shown in table 1

[Comparison Example 3]

The properties of the laminated porous film, produced in the example 1, which consisted of the polyolefin resin and was not provided with the heat-resistant layer were evaluated. Table 1 shows the results.

[Comparison Example 4]

As the layer A, the polypropylene resin ("Prime polypro" F300SV, produced by Prime Polymer Corporation, F300SV, density: 0.90g/cm$^3$, MFR: 3.0g/10 minutes) was prepared. As the β crystal nucleating agent, 3,9-bis[4-(N-cyclohexylcarbamoyl)phenyl]-2,4,8,10-tetraoxaspiro[5.5]undecane was prepared. 100 parts by mass of the polypropylene resin and 0.1 parts by mass of the β crystal nucleating agent were Kneaded. After a strand was cooled to solidify it at 280°C in a water bath by using the twin screw extruder produced by Toshiba Machine Co., Ltd. (diameter: 40mmØ, L/D: 32), they were cut by a pelletizer to prepare a pellet of the polypropylene resin composition. The β activity of the polypropylene resin composition was 80%.
As a mixed resin composition composing the layer B, 10 parts by mass of hydrogenated petroleum resin (Arkon P115 produced by Arakawa Chemical Industries, Ltd.) was added to 90 parts by mass of the high-density polyethylene (Hi-ZEX 3300F produced by Prime Polymer Corporation, density: 0.950g/cm$^3$, MFR: 1.1g/10 minutes). The above-described two components were fused and kneaded at 230°C by using the same direction twin screw extruder to obtain a pelletized resin composition.
The two kinds of the materials were extruded from mouthpieces for lamination molding through the feed block for the two-kind three-layer structure by using different extruders in such a way that the outer layer of the laminated membrane material to be obtained consisted of the layer A and the intermediate layer thereof consisted of the layer B. Thereafter the materials were cooled to solidify them by using the cast roll having a temperature of 124°C to prepare a two-kind three-layer laminated membrane material consisting of the layer A/the layer B/the layer A.
The laminated membrane material was stretched 4.3 times longer than its original length in its length direction by using the lengthwise stretching machine and stretched 2.5 times longer than its original length in its width direction by using the widthwise stretching machine at 90°C. Thereafter the laminated membrane material was subjected to heat fixation/ relaxation treatment.
A heat-resistant layer was not formed on the surface of the obtained laminated porous film. Table 1 shows evaluated properties of the porous film.
Table 1

| | Filler | Film thickness (μm) | F% (mass%) | Coefficient of static friction (-) | Pin extraction properties | Tensile modulus of elasticity when elongated by 3% (MPa) | Air permeability (second/ 100ml) | SD property (second/ 100ml) | Shrinkage factor (%) | | βactivity | | Property of separator |
| | | | | | | | | | MD | TD | DSC | XRD | |
|---|---|---|---|---|---|---|---|---|---|---|---|---|---|
| Example1 | Barium sulfate | 24 | 98 | 0.38 | ◎ | 730 | 450 | >99999 | 10 | 6 | O | O | ◎ |
| Example2 | Alumina | 24 | 98 | 0.39 | ◎ | 720 | 510 | >99999 | 9 | 5 | O | O | ◎ |
| Example3 | Alumina | 24 | 95 | 0.30 | ◎ | 800 | 1680 | >99999 | 10 | 6 | O | O | ◎ |
| Comparison Example1 | Barium sulfate | 24 | 90 | 0.36 | ◎ | 810 | >99999 | - | 13 | 10 | O | O | × |
| Comparison Example2 | Alumina | 24 | 90 | 0.32 | ◎ | 790 | >99999 | - | 15 | 8 | O | O | × |
| Comparison Example3 | - | 20 | - | 0.47 | Δ | 770 | 450 | >99999 | 25 | 22 | O | O | × |
| Comparison Example4 | - | 20 | - | 0.82 | × | 670 | 400 | >99999 | - | - | O | O | × |

EP 2 502 743 A1

Table 1 shows property values ontained in the examples and the comparison examples. The laminated porous films of the examples 1 through 3 constructed in the range specified by the present invention were superior to the films of the comparison examples 1 through 4 constructed out of the range specified by the present invention in the slip performance, the pin extraction properties, and separator property thereof.

The laminated porous films of the comparison examples 1 and 2 which had not more than 90% in the value of F% were low in the coefficient of static friction thereof. Although they were preferable in the pin extraction properties, they did not develop the separator property because they had a high air permeability. The laminated porous film of the comparison example 3 not provided with the heat-resistant layer had a high coefficient of static friction. Thus it was unpreferable in the pin extraction properties.

INDUSTRIAL APPLICABILITY

The laminated porous film of the present invention can be applied to various uses in which air-permeable property is demanded. The laminated porous film can be suitably used as materials for the separator for a battery; hygienic materials such as disposable diaper, body fluid absorbing pats such as sanitary products, a bed sheet, and the like; medical materials such as surgical gown, a base material for stupe; clothing materials such as jumper, sportswear, rain wear, and the like; building materials such as wallpaper, a roof-waterproofing material, a heat insulation material, a sound-absorbing material, and the like; a desiccant; a moisture agent; a deoxidizer; a pocket warmer; and packing materials for packing foods to keep them fresh or only packing food.

EXPLANATION OF REFERENCE SYMBOLS AND NUMERALS

1: slit portion
2: pin
3: flange
5: rotating roller part
6: sample
7: weight
10: separator for battery
20: secondary battery
21: positive electrode plate
22: negative electrode plate
24: positive lead
25: negative lead
26: gasket
27: positive lid
31: aluminum plate
32: film
33: clip
34: length direction of film
35: width direction of film

**Claims**

1. A laminated porous film in which a heat-resistant layer containing a filler and a resin binder is layered on at least one surface of a polyolefin resin porous film; a coefficient of static friction of a surface of said heat-resistant layer is not more than 0.45; an air permeability of said laminated porous film is set to not more than 2000 seconds/100ml; and a tensile modulus of elasticity of said laminated porous film is set to 400 to 1000 MPa when said laminated porous film is elongated by 3% in a longitudinal direction thereof.

2. A laminated porous film according to claim 1, wherein a ratio of said filler to a total of an amount of said filler and that of said resin binder is not less than 92 mass%.

3. A laminated porous film according to claim 1 or 2, wherein an air permeability after said laminated porous film is heated at 135˚C for five seconds is set to not less than 10000 seconds/100ml.

4. A laminated porous film according to any one of claims 1 to 3, wherein a shrinkage factor at 150°C is set to not more than 10%.

5. A laminated porous film according to any one of claims 1 to 4, having β activity.

6. A laminated porous film according to any one of claims 1 to 5, wherein said polyolefin resin porous film consists of a single layer A of a polypropylene resin porous film or consists of a two-kind three-layer laminated porous film in which a layer B consisting of a polyethylene resin porous film is sandwiched between said layers A; and a surface of said polyolefin resin porous film consisting of said single layer A or a surface of said polyolefin resin porous film consisting of said layers A and said layer B laminated one upon another is a corona-treated surface on which said heat-resistant layer is layered.

7. A laminated porous film according to any one of claims 1 to 6, wherein a thickness is set to 5 to 100μm; and a porosity is set to not less than 30% nor more than 70%.

8. A separator for a nonaqueous electrolyte battery in which a laminated porous film according to any one of claims 1 to 7 is used.

9. A nonaqueous electrolyte battery in which a separator according to claim 8 is used.

Fig. 1

Fig. 2

Fig. 3

# Fig. 4A

# Fig. 4B

# EP 2 502 743 A1

<table>
<tr><td colspan="2" style="text-align:center"><strong>INTERNATIONAL SEARCH REPORT</strong></td><td>International application No.<br>PCT/JP2010/070760</td></tr>
</table>

**A. CLASSIFICATION OF SUBJECT MATTER**

*B32B27/32*(2006.01)i, *B32B5/18*(2006.01)i, *H01M2/16*(2006.01)i, *H01M10/052*
(2010.01)i, *H01M10/0566*(2010.01)i

According to International Patent Classification (IPC) or to both national classification and IPC

**B. FIELDS SEARCHED**

Minimum documentation searched (classification system followed by classification symbols)
B32B1/00-43/00, H01M2/10, H01M2/14-18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| Y | WO 2008/149986 A1 (Asahi Kasei Chemicals Corp.), 11 December 2008 (11.12.2008), claims 1, 17, 18; paragraphs [0005], [0010], [0017], [0045], [0050], [0054], [0056], [0057] & EP 2153990 A1 claims 1, 17, 18; paragraphs [0005], [0010], [0017], [0045], [0050], [0054], [0056], [0057] | 1-9 |
| Y | JP 10-316781 A (Nitto Denko Corp.), 02 December 1998 (02.12.1998), paragraph [0039] (Family: none) | 1-9 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 February, 2011 (16.02.11) | 01 March, 2011 (01.03.11) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2010/070760 |

**C (Continuation).   DOCUMENTS CONSIDERED TO BE RELEVANT**

| Category* | Citation of document, with indication, where appropriate, of the relevant passages | Relevant to claim No. |
| --- | --- | --- |
| Y | JP 11-115084 A  (Ube Industries, Ltd.), 27 April 1999 (27.04.1999), paragraphs [0001], [0031]; examples 1 to 3 (Family: none) | 1-9 |
| Y | JP 2002-151044 A  (Sumitomo Chemical Co., Ltd.), 24 May 2002 (24.05.2002), claims 1, 6; paragraph [0023] & EP 1184917 A2 claims 1, 6; paragraph [0031] & US 2002/055036 A1 | 1-9 |
| Y | JP 2008-311220 A  (Mitsubishi Plastics, Inc.), 25 December 2008 (25.12.2008), claims 1, 6, 7; paragraphs [0096], [0128] to [0146] (Family: none) | 5-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000223107 A
- JP 3756815 B
- JP 2004227972 A
- JP 2009026733 A
- JP 2009114434 A
- JP 2009070726 A

- WO 3739481 A
- JP 2003306585 A
- JP 6289566 A
- JP 9019465 A
- JP 4181651 A

**Non-patent literature cited in the description**

- *Macromol. Chem.,* 1986, vol. 187, 643-652
- *Prog. Polym. Sci.,* 1991, vol. 16, 361-404

- *Macromol. Symp.,* 1995, vol. 89, 499-511
- *Macromol. Chem.,* 1964, vol. 75, 134